# EUROPÄISCHE PATENTSCHRIFT

(11) **EP 1 207 003 B1**
(45) Veröffentlichungstag und Bekanntmachung des Hinweises auf die Patenterteilung: **25.02.2004**
(21) Anmeldenummer: 01126154.2
(22) Anmeldetag: 03.11.2001
(51) Int. Cl.: B23K 37/053, B23K 9/32, B23B 31/40

(54) **Vorrichtung für die Innenzentrierung von miteinander zu verschweissenden Rohrstössen**
Device for inner centering of tubes to be welded together
Dispositif pour le centrage intérieur de tubes devant être soudés entre eux

(30) Priorität: 17.11.2000 DE 10057031
(43) Veröffentlichungstag der Anmeldung: 22.05.2002
(73) Patentinhaber: Jankus, Werner, D-58313 Herdecke (DE)
(72) Erfinder: Jankus, Werner, D-58313 Herdecke (DE)
(74) Vertreter: Niemann, Uwe, Dr.-Ing.

(56) Entgegenhaltungen:
- WO-A-02/00385
- DE-A- 3 901 022
- DE-A- 4 304 665
- DE-U- 9 106 163
- US-A- 4 465 220
- US-A- 5 538 173
- PATENT ABSTRACTS OF JAPAN vol. 2000, no. 01, 31. Januar 2000 (2000-01-31) & JP 11 285896 A (KURIMOTO LTD), 19. Oktober 1999 (1999-10-19)

## Beschreibung

Die Erfindung betrifft eine Vorrichtung für die Innenzentrierung von miteinander zu verschweißenden Rohrstößen, - mit zwei Stützkörpem, die jeweils eine äußere Konusfläche aufweisen, wobei die sich verjüngenden Abschnitte der Konusflächen gegeneinander gerichtet sind, mit einer Vielzahl von radial verschieblichen Zentrierelementen, die auf den Konusflächen abgestützt sind, und mit einer Spanneinrichtung, die die Stützkörper in axialer Richtung der Rohrstöße relativ zueinander bewegt, wobei jedem Stützkörper eine Reihe von federnd gegen ihre Konusflächen gedrückten Zentrierelementen zugeordnet ist und zwischen den beiden Stützkörpem ein Widerlager angeordnet ist, an dem wenigstens ein Stützkörper in axialer Richtung geführt ist, und wobei das Widerlager äußere Axialflansche aufweist, an denen sich die Zentrierelemente in axialer Richtung abstützen. Eine derartige Vorrichtung ist bekannt (DE 91 06 163 U). Bei der bekannten Ausführung ist nur einer der Stützkörper an dem Widerlager in axialer Richtung geführt. Jedem Stützkörper ist eine eigene Spanneinrichtung zuzuordnen, mit der die auf dem Stützkörper abgestützten Zentrierelemente in radialer Richtung gegen das Ende eines Rohrstoßes verspannt werden können. Eine Schutzgaszuführung ist nicht vorgesehen.

Bei einer anderen Ausführung (KWU-Prospekt "Piping Systems" vom Juli 1985) sind zwei Gruppen von jeweils zwei Stützkörpem vorgesehen, auf deren gegeneinander gerichteten Konusflächen sich jeweils eine Reihe von Zentrierelementen abstützt. Die Stützkörper jeder Gruppe werden mit einem zugeordneten hydraulischen Antrieb gegeneinander bewegt, wodurch die Zentrierelemente in radialer Richtung gegen das Ende eines Rohrstoßes gespannt werden. Jede Gruppe wird zunächst im Ende eines Rohrstoßes verspannt und danach werden die beiden Rohrstöße und damit die Gruppen zusammengeführt, wobei sie mit Hilfe einer Zentriereinrichtung zentriert werden. Die bekannte Vorrichtung ist konstruktiv aufwendig, erfordert verhältnismäßig hohe Herstellungskosten sowie besondere Sorgfalt beim Einsatz. Es ist allerdings bekannt (US-A-5 538 173), Stützkörper und Zentrierelemente mit Kanälen für die Schutzgaszuführung zu versehen. Dabei handelt es sich allerdings um Bohrungen, die ohne einen Winkel zur Rohrachse verlaufen.

Aufgabe der Erfindung ist es, eine konstruktiv einfachere und kostengünstig herstellbare Vorrichtung anzugeben, die auch montagefreundlicher ist.

Diese Aufgabe wird dadurch gelöst, daß das Widerlager aus zwei miteinander verbundenen Scheiben besteht, die jeweils einen inneren Axialflansch und einen äußeren Axialflansch aufweisen, wobei die inneren Axialflansche in zugeordnete Ringnuten der Stützkörper eingreifen, so daß auch der zweite Stützkörper in axialer Richtung geführt ist, daß die Spanneinrichtung ein rohrförmiges Zugelement aufweist, an dessen freies Ende eine Schutzgaszuführung angeschlossen ist und das Radialbohrungen aufweist, die in eine Ausnehmung der Scheibe münden, und daß von der Ausnehmung radiale Schutzgaskanäle ausgehen, die in eine zwischen den äußeren Axialflanschen angeordnete Umfangsnut münden, die außenseitig mit einem feinmaschigen oder feinporigen Material abgedeckt ist.
Diese Vorrichtung benötigt nur zwei mit Konusflächen versehene Stützkörper und das dazwischen angeordnete Widerlager. Mit Ausnahme der Zentrierelemente können alle Bauteile der Vorrichtung kostengünstig als Drehteile hergestellt werden. Für die Innenzentrierung von Rohrstößen wird die Vorrichtung als Ganzes in die miteinander zu verschweißenden Rohrstöße eingeschoben oder eingezogen, bis die den Stützkörpem zugeordneten Reihen der Zentrierelemente sich beidseits des Schweißspaltes am Ende des einen und des anderen Rohrstoßes befinden. Dann werden die beiden Stützkörper mit Hilfe der Spanneinrichtung gegeneinander bewegt, wobei sie vom Widerlager geführt und zentriert werden, während die Zentrierelemente, die sich in axialer Richtung an den Axialflanschen des Widerlagers abstützen, gegen die Innenwandung der Rohrstöße verspannt werden. Die Schutzgaszufuhr erfolgt dann über einen der Stützkörper und die radialen Schutzgaskanäle sowie die Umfangsnut Nach Fertigstellung der Schweißnaht wird die Spanneinrichtung gelöst und die Zentrierelemente gleiten aufgrund ihres federnden Andrucks in eine Ruhestellung zurück, bei der die Vorrichtung aus dem Rohr heraus bewegt werden kann.

Die Zentrierelemente können außenseitig Ausnehmungen aufweisen, die eine durchgehende Umfangsnut für eine darin angeordnete Feder ausweisen. Damit die Vorrichtung auch durch und in Rohrkrümmern problemlos bewegt werden kann, sollten die neben den Ausnehmungen axial außen liegenden Abschnitte der Zentrierelemente radial kürzer sein als die axial innen liegenden Abschnitte.

Im Bereich der Enden der sich verjüngenden Abschnitte der Konusflächen können Anschläge für die Zentrierelemente vorgesehen sein, damit die Zentrierelemente in entspanntem Zustand nicht von den Konusflächen abgleiten können.

Die Spanneinrichtung weist vorzugsweise ein Zugelement auf, dessen eines Ende verschieblich durch den ersten Stützkörper geführt sowie am zweiten Stützkörper befestigt ist und dessen anderes Ende einen Gewindeabschnitt trägt, auf dem eine am ersten Stützkörper abgestützte Spannmutter angeordnet ist. Das Zugelement kann im einfachsten Fall eine Stange oder auch ein Rohr sein, welches der Schutzgaszuführung dient.

Nach einem weiteren Vorschlag der Erfindung weist die Spanneinrichtung einen Bowdenzug auf, dessen Seele das Zugelement ist und dessen Hülle sich zwischen dem ersten Stützkörper und der Spannmutter erstreckt. Ein Bowdenzug ist zwar biegsam, besitzt aber soviel Steifigkeit, daß damit die Vorrichtung auch durch Rohrkrümmer bewegt werden kann, ohne daß der Bowdenzug, wie zum Beispiel ein einfaches Zugseil oder eine Kette, sich gegen die Innenseite des Rohrkrümmers legt und eine weitere Bewegung bremst oder gar verhindert. Die Rückstellkraft des Bowdenzuges kann durch Anziehen der Spanneinrichtung vergrößert werden.

Im folgenden werden in der Zeichnung dargestellte Ausführungsbeispiele der Erfindung erläutert; es zeigen:
- Figur 1: einen Axialschnitt sowie eine erfindungsgemäße Vorrichtung im Einsatz,

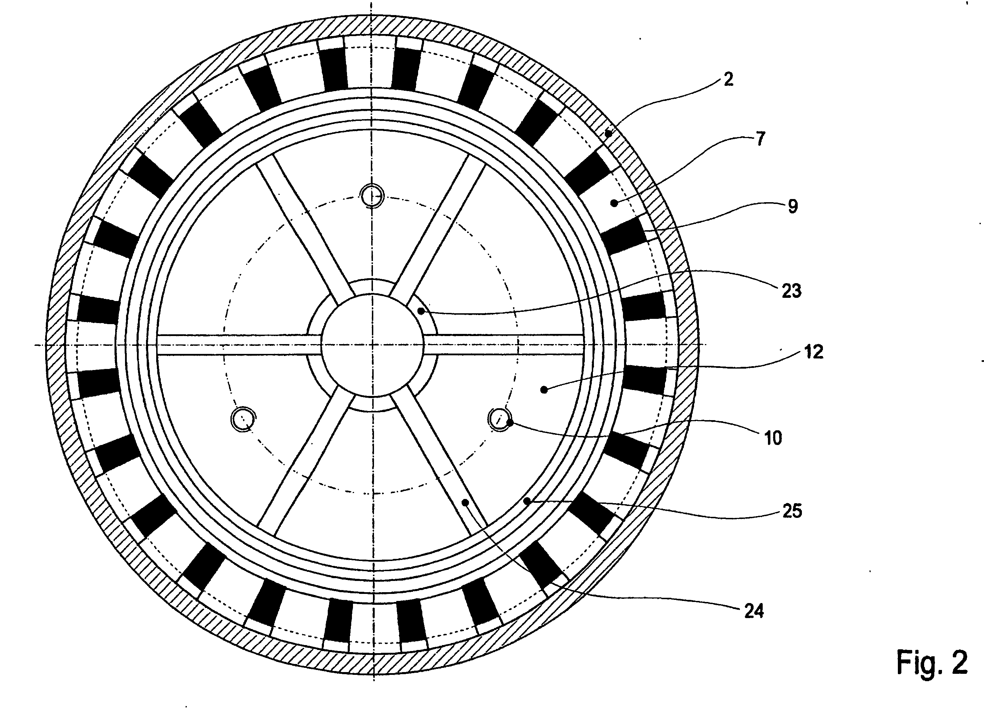

- Figur 2: einen Schnitt in Richtung II-II durch den Gegenstand nach Figur 1,
- Figur 3: einen Schnitt in Richtung III-III durch den Gegenstand nach Figur 1,
- Figur 4: eine andere Ausführung des Gegenstandes nach Figur 1.

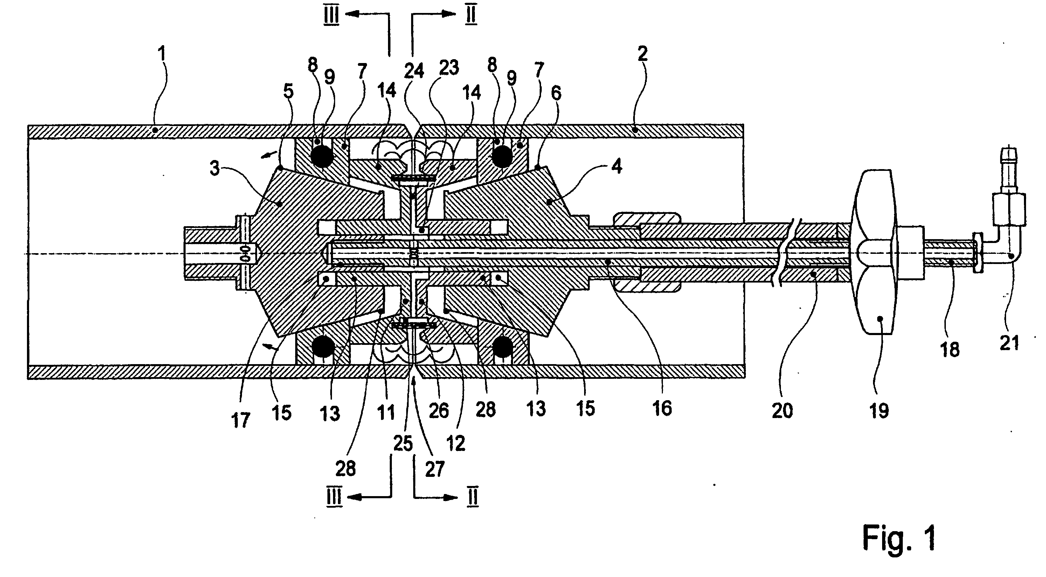

In Figur 1 erkennt man zwei miteinander zu verbindende Rohrstöße 1, 2, von denen der Rohrstoß 1 zu einer bereits installierten Rohrleitung gehört, während der andere Rohrstoß 2 daran zentriert und unter Schutzgas angeschweißt werden soll.

Eine in die beiden Rohrstöße 1, 2 eingeführte Vorrichtung für die Innenzentrierung weist zwei Stützkörper 3, 4 mit jeweils äußeren Konusflächen 5, 6 auf, deren sich verjüngende Abschnitte gegeneinander gerichtet sind. Auf jeder der Konusflächen 5 bzw. 6 stützt sich in Umfangsrichtung eine Vielzahl von radial verschieblichen Zentrierelementen 7 ab. Die Zentrierelemente 7 jeder Reihe besitzen außenseitige Ausnehmungen 8, die eine durchgehende Umfangsnut für eine darin angeordnete Feder 9 bilden. Die Feder 9 ist bei der dargestellten Ausführung eine Rundschnurfeder aus einem hitzebeständigen Material mit großer Federkraft, insbesondere aus einem Fluor-Kautschuk, der auch unter dem Handelsnamen Viton® bekannt ist. Die Feder 9 drückt die Zentrierelemente gegen die Konusflächen 5 bzw. 6.

Zwischen den beiden Stützkörpem 3, 4 befindet sich ein aus zwei miteinander zum Beispiel durch eine Schraubverbindung 10 miteinander verbundenen Scheiben 11, 12, die jeweils einen inneren Axialflansch 13 und einen äußeren Axialflansch 14 aufweisen. An den äußeren Axialflanschen 14 sind die beiden Reihen der Zentrierelemente 7 in axialer Richtung abgestützt. Die inneren Axialflansche 13 des Widerlagers greifen in zugeordnete Ringnuten 15 der Stützkörper 3, 4 ein, zentrieren die Stützkörper 3, 4 und führen sie in axialer Richtung.

Zu der Vorrichtung gehört auch eine Spanneinrichtung mit einem Zugelement 16, das bei der dargestellten Ausführung ein Rohr ist, welches bei der Ausführung nach Figur 1 durch eine zentrale Durchgangsbohrung des Stützkörpers 4 geführt und in einer zentralen Gewindebohrung 17 des anderen Stützkörpers 3 befestigt ist. Das freie Ende des Zugelementes 16 weist ein Außengewinde 18 für eine darauf aufgedrehte Spannmutter 19 auf, die sich über ein das Zugelement 16 umgebendes Rohr 20 an der Außenseite des Stützkörpers 4 abstützt.

An das freie Ende des Zugelementes 16 ist eine Schutzgaszuführung 21 angeschlossen. Im Anschlußbereich der beiden Scheiben 11, 12 des Widerlagers weist das Zugelement 16 Radialbohrungen 22 auf, die in eine ringförmige Ausnehmung 23 der Scheibe 15 münden. Von der Ausnehmung 23 gehen radiale Schutzgaskanäle 24 aus, die in eine zwischen den äußeren Axialflanschen 14 der beiden Scheiben 11, 12 angeordnete Umfangsnut 25 münden. Diese Umfangsnut 25 ist außenseitig mit einem feinmaschigen oder feinporigen Material 26 abgedeckt, damit unterhalb des Schweißspaltes 27 eine laminare Schutzgasströmung entsteht.

Mit Ausnahme der Zentrierelemente 7 bestehen alle Bauteile der Vorrichtung aus kostengünstig herzustellenden Drehteilen.

Die dargestellte Vorrichtung arbeitet wie folgt: Bei gelöster Spanneinrichtung befinden sich die Zentrierelemente 7 unter der Wirkung ihrer Federn 9 im Bereich der Konusabschnitte mit kleinerem Durchmesser. Im Bereich der Enden der sich verjüngenden Abschnitte der Konusflächen 5, 6 sind Anschläge 28 für die Zentrierelemente 7 vorgesehen, die verhindern, daß die Zentrierelemente 7 von den Konusflächen 5 bzw. 6 abgleiten können. In diesem Zustand wird die Vorrichtung in die miteinander zu verschweißenden Rohrstöße 1, 2 soweit eingeführt, bis sich eine Reihe der Zentrierelemente 7 im Bereich des Rohrstoßes 1 und die andere Reihe der Zentrierelemente 7 im Bereich des Rohrstoßes 2 befindet. Dann wird die Spanneinrichtung betätigt, wodurch die beiden Stützkörper 3, 4 zentriert und geführt gegeneinander bewegt werden. Dabei gleiten die Zentrierelemente 7 der beiden Reihen, die sich an den Axialflanschen 14 abstützen, radial nach außen und zentrieren die Rohrstöße 1, 2. Eine Zentrierung findet auch statt, wenn die Durchmesser der beiden Rohrstöße 1, 2 nicht exakt gleich sind, sondern voneinander abweichen, weil die Zentrierelemente 7 jeder Reihe unabhängig voneinander auf ihren zugeordneten Konusflächen 5 bzw. 6 gleiten. Nach der Zentrierung wird Schutzgas zugeführt und die beiden Rohrstöße 1, 2 können längs des Schweißspaltes 27 miteinander verschweißt werden. Nach Fertigstellung der Schweißnaht wird die Spanneinrichtung gelöst, wodurch die Stützkörper unter der Wirkung der Federn 9 axial auseinander bewegt werden, so daß die Vorrichtung aus dem Rohr heraus bewegt werden kann.

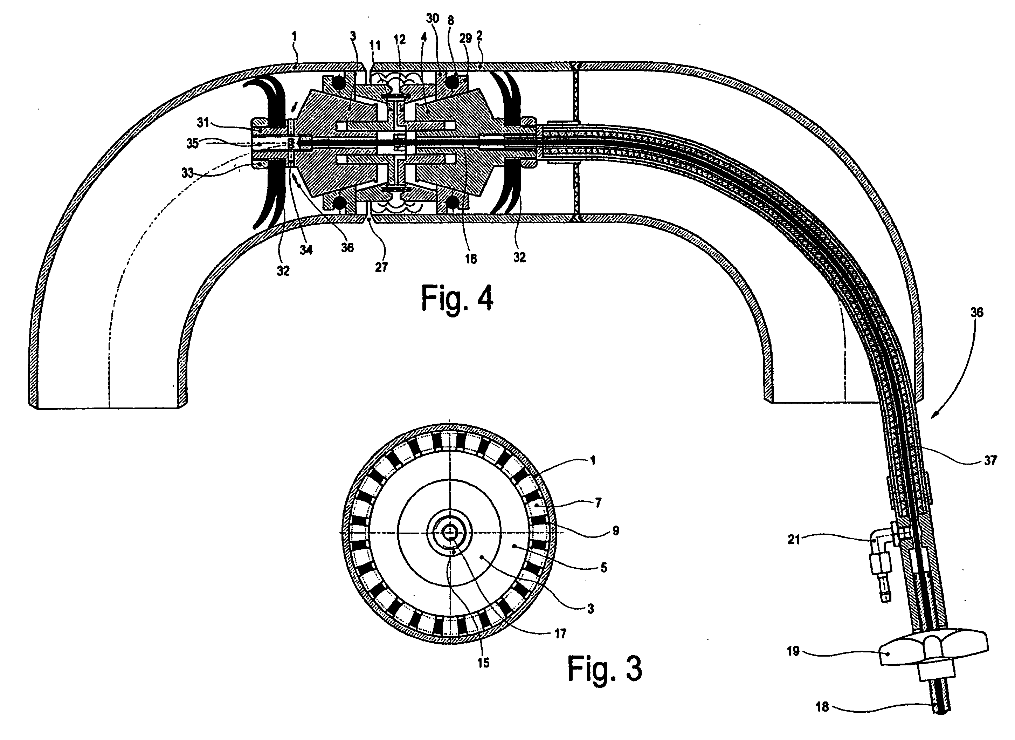

Bei der Ausführung nach Figur 4 bezeichnen gleiche Bezugszeichen gleiche Teile. Bei den Rohrstößen 1, 2 handelt es sich um Rohrkrümmer. Damit die Vorrichtung leichter durch die Rohrkrümmer bewegt werden kann, sind an den Zentrierelementen 7 die neben den Ausnehmungen 8 außen liegenden Abschnitte 29 der Zentrierelemente 7 radial kürzer als die axial innen liegenden Abschnitte 30.

Die Stützkörper 3, 4 weisen axial außen Gewindezapfen 31 auf, auf die mit den Rohrstößen 1 bzw. 2 dichtende Dichtscheiben 32 aufgesetzt sind, die mit auf die Gewindezapfen 31 aufgedrehten Muttern 33 gehalten sind. Der Gewindezapfen 31 des Stützkörpers 3 weist zwischen dem Stützkörper 3 und der Dichtscheibe 32 Radialbohrungen 34 auf, die in eine zentrale Sackbohrung 35 münden, so daß überschüssiges Schutzgas, welches zwischen den Zentrierelementen 7 austritt, abfließen kann, wie das durch Pfeile 36 angedeutet ist.

Die Spanneinrichtung ist bei dieser Ausführung als Bowdenzug 36 ausgebildet, dessen Seele das im Stützkörper 3 befestigte Zugelement 16 bildet und dessen Hülle 37 als Abstützung zwischen dem Stützkörper 4 und der Spannmutter 19 dient. Neben der Spannmutter 19, jedoch zwischen Spannmutter 19 und Stützkörper 4, mündet in den Bowdenzug 36 die Schutzgaszuführung 21, so daß Schutzgas durch den Bowdenzug 36 und den Stützkörper 4 bis in den Bereich des Schweißspaltes 27 strömen kann.

Mit dieser Spannvorrichtung läßt sich die Vorrichtung innerhalb einer Rohrleitung, die Rohrkrümmer aufweist, leichter manipulieren, weil der Bowdenzug 36 eine gewisse Steifigkeit besitzt, gleichwohl aber biegsam ist und dadurch verhindert werden kann, daß der Bowdenzug 36 beim Schieben oder Ziehen der Vorrichtung innerhalb der Rohrleitung sich gegen die Innenseite eines Rohrkrümmers legt und dadurch eine weitere Bewegung der Vorrichtung bremst oder ganz verhindert.

## Patentansprüche

1. Vorrichtung für die Innenzentrierung von miteinander zu verschweißenden Rohrstößen (1, 2) mit zwei Stützkörpern (3, 4) , die jeweils eine äußere Konusfläche (5, 6,) aufweisen, wobei die sich verjüngenden Abschnitte der Konusflächen (5, 6) gegeneinander gerichtet sind, mit einer Vielzahl von radial verschieblichen Zentrierelementen (7), die auf den Konusflächen (5, 6) abgestützt sind und mit einer Spanneinrichtung (16, 17, 18), die die Stützkörper (3, 4) in axialer Richtung der Rohrstöße (1, 2) relativ zueinander bewegt, wobei jedem Stützkörper (3, 4) eine Reihe von federnd gegen ihre Konusflächen (5, 6) gedrückten Zentrierelementen (7) zugeordnet ist und zwischen den beiden Stützkörpem (3, 4) ein Widerlager angeordnet ist, an dem ein Stützkörper (3, 4) in axialer Richtung geführt ist, und wobei das Widerlager äußere Axiatflansche (14) aufweist, an denen sich die Zentrierelemente (7) in axialer Richtung abstützen, **dadurch gekennzeichnet, daß** das Widerlager aus zwei miteinander verbundenen Scheiben (11, 12) besteht, die jeweils einen inneren Axialflansch (13) und einen äußeren Axialflansch (14) aufweisen, wobei die inneren Axialflansche (13) in zugeordnete Ringnuten (15) der Stützkörper (3, 4) eingreifen, sodaß auch der zweite Stützkörper (4,3) in axialer Richtung geführt ist, daß die Spanneinrichtung ein rohrförmiges Zugelement (16) aufweist, an dessen freies Ende eine Schutzgaszuführung (21) angeschlossen ist und das Radialbohrungen (22) aufweist, die in eine Ausnehmung (22) der Scheibe (12) münden, und daß von der Ausnehmung (23) radiale Schutzgaskanäle (24) ausgehen, die in eine zwischen den äußeren Axialflanschen (14) angeordnete Umfangsnut (25) münden, die außenseitig mit einem feinmaschigen oder feinporigen Material abgedeckt ist.

2. Vorrichtung nach Anspruch 1, **dadurch gekennzeichnet , daß** die Zentrierelemente (7) außenseitig Ausnehmungen (8) aufweisen, die eine durchgehende Umfangsnut für eine darin angeordnete Feder (9) bilden.

3. Vorrichtung nach einem der Ansprüche 1 oder 2, **dadurch gekennzeichnet, daß** die neben den Ausnehmungen (8) axial außen liegenden Abschnitte (29) der Zentrierelemente (7) radial kürzer sind als die axial innen liegenden Abschnitte (30).

4. Vorrichtung nach einem der Ansprüche 1 bis 3, **dadurch gekennzeichnet, daß** im Bereich der Enden der sich verjüngenden Abschnitte der Konusflächen (5, 6) Anschläge (28) für die Zentrierelemente (7) vorgesehen sind.

5. Vorrichtung nach einem der Ansprüche 1 bis 4, **dadurch gekennzeichnet, daß** eine Ende des Zugelementes (16) verschieblich durch den ersten Stützkörper (4) geführt sowie am zweiten Stützkörper (3) befestigt ist und sein anderes Ende einen Gewindeabschnitt (18) trägt, auf dem eine am ersten Stützkörper (4) abgestützte Spannmutter (19) ange ordnet ist.

6. Vorrichtung nach Anspruch 5, **dadurch gekennzeichnet , daß** die Spanneinrichtung einen Bowdenzug (36) aufweist, dessen Seele das Zugelement (16) ist und dessen Hülle (37) sich zwischen dem ersten Stützkörper (4) und der Spannmutter (19) erstreckt.

## Claims

1. Device for internal centring of butt-joint pipes (1, 2) to be welded together, comprising two support bodies (3, 4) each having an outer cone surface (5, 6), wherein the tapering sections of the cone surfaces (5, 6) are directed towards one another, a plurality of radially displaceable centring elements (7) supported on the cone surfaces (5, 6), and a tightening device (16, 17, 18) which moves the support bodies (3, 4) relative to one another in axial direction of the butt-joint pipes (1, 2), wherein each support body (3, 4) is associated with a series of centring elements (7) resiliently pressed against the cone surfaces (5, 6) thereof, and a counter-bearing, at which a support body (3, 4) is guided in axial direction, -is arranged between the two support bodies (3, 4), and wherein the counter-bearing has an outer axial flange (14) at which the centring elements (7) are supported in axial direction, **characterised in that** the counter-bearing consists of two discs (11, 12) which are connected together and which each have an inner axial flange (13) and an outer axial flange (14), wherein the inner axial flanges (13) engage in associated annular grooves (15) of the support body (3, 4) so that the second support body (4, 3) is also guided in axial direction, that the tightening device comprises a tubular tensioning element (16), with the free end of which a protective gas feed (21) is connected and which has radial bores (22) opening into a recess (23) of the disc (12), and that radial protective gas channels (24), which open into a circumferential groove (25) arranged between the outer axial flanges (14) and covered at the outer side by a fine-mesh or fine-pore material, go out from the recess (23).

2. Device according to claim 1, **characterised in that** the centring elements (7) at the outer side have recesses (8) which form a continuous circumferential groove for a spring (9) arranged therein.

3. Device according to one of claims 1 and 2, **characterised in that** the portions (29), which are disposed axially outwardly near the recesses (8), of the centring elements (7) are radially shorter than the portions (30) disposed axially inwardly.

4. Device according to one of claims 1 to 3, **characterised in that** abutments (28) for the centring elements (7) are provided in the region of the ends of the tapering sections of the cone surfaces (5, 6).

5. Device according to one of claims 1 to 4, **characterised in that** an end of the tensioning element (6) is guided through the first support body (4) to be displaceable and is fastened to the second support body (3) and its other end carries a threaded portion (18), on which a tightening nut (19) supported at a first support body (4) is arranged.

6. Device according to claim 5, **characterised in that** the tightening device comprises a Bowden pull (36), the core of which is the tensioning element (16) and the casing (37) of which extends between the first support body (4) and the tightening nut (19).

## Revendications

1. Dispositif pour le centrage intérieur de bouts de tubes (1, 2) devant être soudés entre eux, avec deux corps de soutien (3, 4) qui présentent chacune une face conique extérieure (5, 6), les parties allant en se rétrécissant des faces coniques (5, 6) étant dirigées l'une vers l'autre, avec une pluralité d'éléments de centrage (7) radialement coulissants, qui s'appuient sur les faces coniques (5, 6), et avec un équipement de serrage (16, 17, 18) qui déplace les corps de soutien (3, 4) l'un par rapport à l'autre dans la direction axiale des bouts de tubes (1, 2), une série d'éléments de centrage (7) pressés élastiquement contre les faces coniques (5, 6) étant associée à chaque corps de soutien (3, 4) et un contre-appui étant disposé entre les deux corps de soutien (3, 4), contre lequel un corps de soutien (3, 4) est guidé en direction axiale et le contre-appui présentant des brides axiales extérieures (14) contre lesquelles les éléments de centrage (7) s'appuient en direction axiale, **caractérisé en ce que** le contre-appui est constitué de deux disques (11, 12) mutuellement assemblés qui présentent chacun une bride axiale intérieure (13) et une bride axiale extérieure (14), les brides axiales intérieures (13) s'engageant dans des rainures annulaires associées (15) des corps de soutien (3, 4), de sorte que le deuxième corps de soutien (4, 3) est lui aussi guidé en direction axiale, **en ce que** l'équipement de serrage présente un élément de traction tubulaire (16), à l'extrémité libre duquel est raccordée une alimentation (21) en gaz protecteur et qui présente des perçages radiaux (22) qui débouchent dans un évidement (23) du disque (12), et **en ce que** des canaux radiaux (24) de gaz protecteur partent de l'évidement (23), canaux qui débouchent dans une rainure périphérique (25), disposée entre les brides axiales extérieures (14), qui est recouverte extérieurement par un matériau à mailles fines ou microporeux.

2. Dispositif selon la revendication 1, **caractérisé en ce que** les éléments de centrage (7) présentent extérieurement des évidements (8) qui forment une rainure périphérique continue pour un ressort (9) qui y est disposé.

3. Dispositif selon la revendication 1 ou 2, **caractérisé en ce que** les parties (29) des éléments de centrage (7) qui sont situées axialement du côté extérieur des évidements (8) sont radialement plus courtes que les parties (30) situées axialement du côté intérieur.

4. Dispositif selon l'une des revendications 1 à 3, **caractérisé en ce que** des butées (28) pour les éléments de centrage (7) sont prévues dans la région des extrémités des parties des faces coniques (5, 6) qui vont en se rétrécissant.

5. Dispositif selon l'une des revendications 1 à 4, **caractérisé en ce qu'**une extrémité de l'élément de traction (16) est guidée en coulissement à travers le premier corps de soutien (4) et est fixée sur le deuxième corps de soutien (3), et son autre extrémité porte une partie filetée (18) sur laquelle est disposé un écrou de serrage (19) s'appuyant contre le premier corps de soutien (4).

6. Dispositif selon la revendication 5, **caractérisé en ce que** l'équipement de serrage présente un câble Bowden (36), dont l'âme est l'élément de traction (16) et dont la gaine (37) s'étend entre le premier corps de soutien (4) et l'écrou de serrage (19).
